# EUROPEAN PATENT APPLICATION

(11) **EP 1 411 507 A2**
(43) Date of publication of application: **21.04.2004**
(21) Application number: 03000343.8
(22) Date of filing: 09.01.2003
(51) Int. Cl.: G11B 7/24

(54) **An optical storage medium of limiting play times**

(30) Priority: 17.10.2002 US 65433
(71) Applicant: U-Tech Media Corp., Tao Yuan Hsien (TW)
(72) Inventor: Chen, Irene, Taipei City Taiwan, R.O.C. (TW); Wang, Tung-Chuan, Nan-Tou Hsien Taiwan, R.O.C. (TW); Lay, Jyh-Huei 4F, No.81-13 Min-Hu Rd. Community 22, Taiwan R.O.C. (TW); Chou, Tien-Yu, Hsin-Chu City, Taiwan R.O.C. (TW)
(74) Representative: Weber, Joachim, Dr.

(57) **Abstract**

An optical data storage medium (50) includes a first substrate (52), the first substrate (52) including a plurality of first data structures (52a); a second substrate (60) positioned above the first substrate (52), the second substrate (60) including a plurality of second data structures (60a); a reflective layer (58) positioned on the second substrate (60) to cover the second data structures (60a); and a masking layer (54) interposed between the reflective layer (58) and the first substrate (52) to cover the first data structures (52a), the masking layer (54) having a varying reflectivity to thereby render the second data structures (60a) unreadable.

## Description

The present invention relates to an optical data storage medium according to the precharacterizing clause of claim 1.

While a typical compact disc (CD) or a typical compact disc-read only memory (CD-ROM) available at the present has a recording capacity of 640M bytes, a digital versatile disc (DVD) with a high recording capacity of 4.7 Gbytes is also available with the recent increase in the density. There has also been proposed a dual-layer DVD having its recording surface double-layered to obtain a higher recording capacity of 8.5 Gbytes. Researches on preventing an illegal copying from the DVD, such as distributing software or other information that is recorded on the DVD by additional computer programs have been made. However, the protection mechanism that relies on computer programs has the potential to be defeated. It is therefore necessary to develop other protection mechanisms to effectively prevent the illegal copying problems.

This in mind, the present invention aims at providing a corresponding optical data storage medium of limiting plat times.

This is achieved by an optical data storage medium according to claim 1. The dependent claims pertain to corresponding further developments and improvements.

As will be seen more clearly from the detailed description following below, the claimed optical data storage medium includes a first substrate, the first substrate including a plurality of first data structures; a second substrate positioned above the first substrate, the second substrate including a plurality of second data structures; a reflective layer positioned on the second substrate to cover the second data structures; and a masking layer interposed between the reflective layer and the first substrate to cover the first data structures, the masking layer having a varying reflectivity to thereby render the second data structures unreadable.

In the following, the invention is further illustrated by way of example, taking reference to the accompanying drawings. Thereof
Fig.1 is a cross-sectional diagram of a DVD according to the prior art,
Fig.2 is a cross-sectional diagram of a dual layer DVD according to the prior art,
Fig.3 is a cross-sectional diagram of a first embodiment of an optical data storage medium according to the present invention,
Fig.4 is a cross-sectional diagram of a second embodiment of an optical data storage medium according to the present invention,
Fig.5 is a cross-sectional diagram of a third embodiment of an optical data storage medium according to the present invention, and
Fig.6 is a cross-sectional diagram of a fourth embodiment of an optical data storage medium according to the present invention.

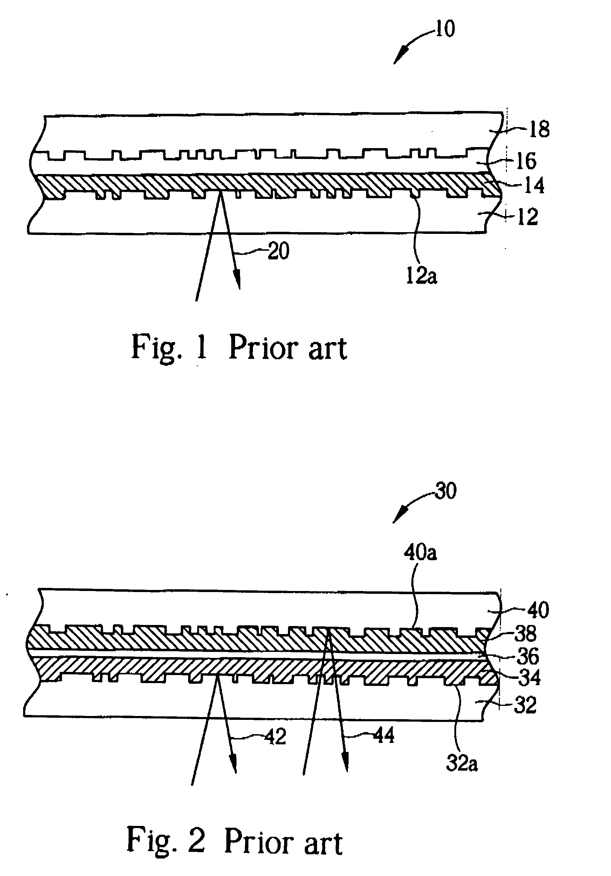

The prior art DVD is disclosed in U.S. Pat. No. 6,007,889. Please refer to Fig.1 of a cross-sectional diagram of a DVD 10 according to the prior art. The DVD 10 is a single-layer DVD, such as a DVD-5 disc, having a single readable information layer. As shown in Fig.1, the DVD 10 includes a first substrate 12, a reflective layer 14 coated on a plurality of data structures 12a on the first substrate 12, and a bonding layer 16 formed on the reflective layer 14 for connecting the first substrate 12 to a second substrate 18. Normally, the first substrate 12 and the second substrate 18 are made of polycarbonate, and the reflective layer 14 is a metallic layer. The data structures 14a are readable by a laser beam 20 of a predetermined focusing depth during a play process. The laser beam 20 is emitted from a picked head (not shown) installed under the first substrate 12 and is penetrating through the first substrate 12 and the data structures 12a. As a result, a photo detector of the picked head can be used to detect a reflected laser beam 20 from the reflective layer 14 for identifying the data structures 12a.

Please refer to Fig.2 of a cross-sectional diagram of a DVD 30 according to the prior art. The DVD 30 is a dual-layer DVD, such as a DVD-9 disc, having two readable information layers. As shown in Fig.2, the DVD 30 includes a first substrate 32, a semi-reflective layer 34 coated on the first substrate 32, a reflective layer 38 coated on a plurality of data structures 32a on the first substrate 32, a reflective layer 38 coated on a plurality of data structures 40a on a second substrate 40, and a bonding layer 36 interposed between the semi-reflective layer 34 and the reflective layer 38 for bonding the first substrate 32 and the second substrate 40 together. Normally, the first substrate 32 and the second substrate 40 are made of polycarbonate. The semi-reflective layer 34 is a metallic layer, such as a gold layer, and the reflective layer 38 is also a metallic layer, such as an aluminum layer.

For reading lower data of the DVD 30, such as the data structures 32a, a laser beam 42 of a predetermined focusing depth is emitted from a picked head (not shown) installed under the first substrate 32 and is penetrating through the first substrate 32 and the data structures 32a. As a result, a photo detector of the picked head can be used to detect a reflected laser beam 42 from the semi-reflective layer 34 for identifying the data structures 32a. Similarly, for reading upper data of the DVD 30, such as the data structures 40a, a laser beam 44 of a predetermined focusing depth is emitted from the picked head installed under the first substrate 32 and is penetrating through the first substrate 32, the semi-reflective layer 34, the bonding layer 36 until the reflective layer 38. As a result, a photo detector of the picked head can be used to detect a reflected laser beam 44 from the reflective layer 38 for identifying the data structures 40a.

With the development of the high storage capacity, DVD has become a popular storage medium to store application software or audio/video information. Researches on preventing an illegal copying from the DVD, such as distributing software or other information that is recorded on the DVD by additional computer programs have been made. Since the protection mechanism that relies on computer programs has the potential to be defeated, other protection mechanisms are required to effectively prevent the illegal copying problems.

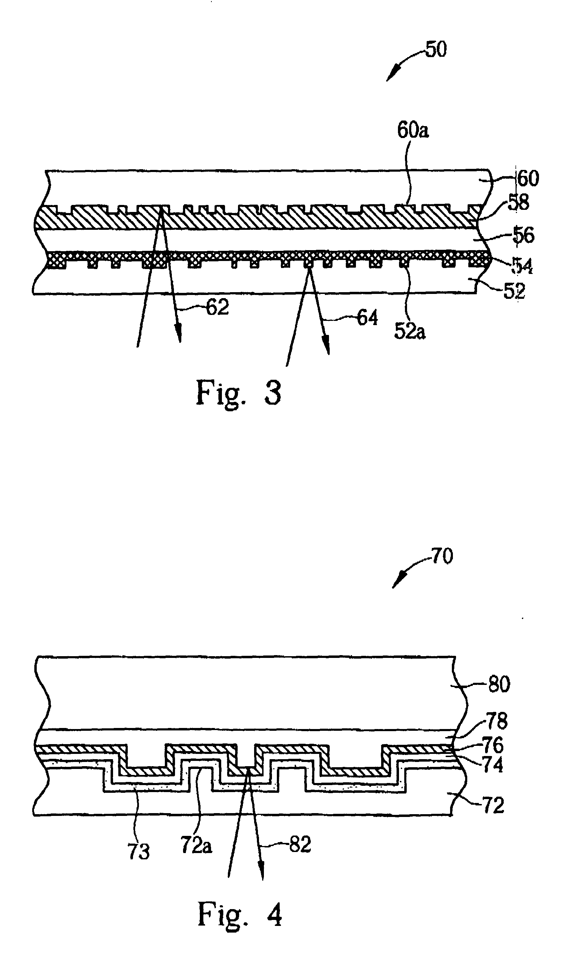

Please refer to Fig.3 of a cross-sectional diagram of a first embodiment of an optical data storage medium 50 according to the present invention. The optical data storage medium 50 is a single-layer DVD, such as a DVD-5 disc, having a single readable information layer. However, the an optical data storage medium 50 is not limited to have a single readable information layer, and other optical data storage medium having multiple readable information layers (such as double or triple readable information layers) are also applicable to the first embodiment of the present invention. As shown in Fig.3, the an optical data storage medium 50 includes a plurality of data structures 52a formed by etching a surface of a first substrate 52, a masking layer 54 positioned on the first substrate 52 and the data structures 52a, a plurality of data structures 60a formed by etching a surface of a second substrate 60, a reactive layer 58 positioned on the second substrate 60 and the data structures 60a, and a bonding layer 56 interposed between the reflective layer 58 and the masking layer 54 for bonding the first substrate 52 with the second substrate 60. Normally, the first substrate 52 and the second substrate 60 are made of polycarbonate, the reflective layer 58 is a metallic layer, and the masking layer 54 is made of phase change materials for defining readable times of the optical data storage medium 50. Specifically, according to the present invention, storage data of the DVD-5 disc 50 (the data structures 60a) is formed by etching the surface of the upper substrate 60 counterclockwise, which is different from an ordinary DVD-5 disk having storage data formed by etching a surface of a lower substrate clockwise.

For reading data of the optical data storage medium 50 (i.e., the data structures 60a), a laser beam 62 of a predetermined focusing depth is emitted from a picked head (not shown) installed under the first substrate 52 and is penetrating through the first substrate 32, the masking layer 54, the bonding layer 56 until the reflective layer 58. As a result, a photo detector of the picked head can be used to detect a reflected laser beam 62 from the reflective layer 58 for identifying the data structures 60a.

With the play times increasing, the accumulated energy in the optical data storage medium 50 changes the reflectivity of the phase change materials composing the masking layer 54. For example, transparent phase change materials of amorphous phase will gradually transform into non-transparent phase change materials of crystal phase. In other words, as play time increasing, the ratio of crystal structures within the masking layer 54 raises, which results in an increasing of reflectivity of the masking layer 54 until a laser beam cannot penetrate through the masking layer 54 for reading the date structures 60a. At that time, the laser beam will be reflected from the masking layer 54, such as the laser beam 64 shown in Fig.3, and users can only read a warning statement of the data structures 52a showing that the data structures 60a are unreadable.

Please refer to Fig.4 of a cross-sectional diagram of a second embodiment of an optical data storage medium 70 according to the present invention. The optical data storage medium 70 is a single-layer DVD, such as a DVD-5 disc, having a single readable information layer. However, the an optical data storage medium 70 is not limited to have a single readable information layer, and other optical data storage medium having multiple readable information layers (such as double or triple readable information layers) are also applicable to the second embodiment of the present invention. As shown in Fig.4, the optical data storage medium 70 includes a plurality of data structures 72a formed by etching a surface of a first substrate 72, a reflective layer 76 positioned on the first substrate 72 and the data structures 72a, a reactive layer 73 positioned adjacent to the reflective layer 76 (such as above the reflective layer 76 or below the reflective layer 76), a barrier layer 74 interposed between the reactive layer 73 and the reflective layer 76, and a bonding layer 78 positioned on the reflective layer 76 for bonding the first substrate 72 with a second substrate 80. Normally, the first substrate 72 and the second substrate 80 are made of polycarbonate, the reflective layer 58 is a metallic layer, and the reactive layer 73 is made of reactive compounds for defining readable times of the optical data storage medium 70.

For reading data of the optical data storage medium 70 (i.e., the data structures 72a), a laser beam 72 of a predetermined focusing depth is emitted from a picked head (not shown) installed under the first substrate 72 and is penetrating through the first substrate 72, the reactive layer 73, the barrier layer 74 until the reflective layer 76. As a result, a photo detector of the picked head can be used to detect a reflected laser beam 82 from the reflective layer 76 for identifying the data structures 72a.

With the play times increasing, the accumulated energy in the optical data storage medium 70 achieves diffusion of the reactive compounds from within the reactive layer 73 to the barrier layer 74 and the reflective layer 76. Therein, the barrier layer 74 is used to control the time of the reactive compounds diffusing to the reflective layer 76. Furthermore, the diffused reactive compounds react with the reflective layer 76 so as to change the reflectivity of the reflective layer 76. Specifically, with the play times increasing, the reflectivity of the reflective layer 76 covering a portion of the data structures 72a also changes, resulting in magnitude decay or direction deviation of the reflected. laser beam 82 for reading the portion of the data structures 72a. Therefore, the photo detector of the picked head is unable to detect the reflected laser beam 82 correctly, and the optical data storage medium 70 of the present invention is limitedly read.

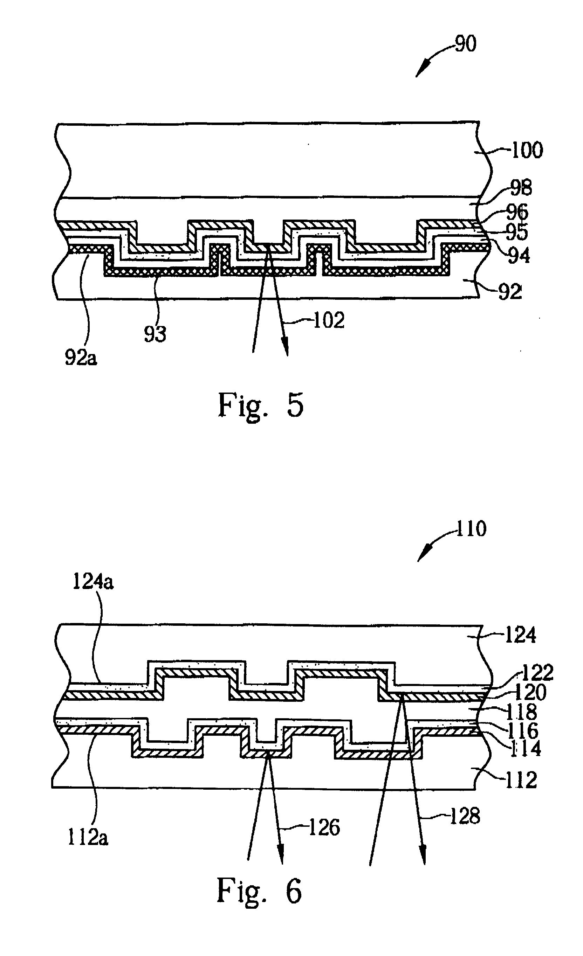

Please refer to Fig.5 of a cross-sectional diagram of a third embodiment of an optical data storage medium 90 according to the present invention. The optical data storage medium 90 is a single-layer DVD, such as a DVD-5 disc, having a single readable information layer. However, the an optical data storage medium 90 is not limited to have a single readable information layer, and other optical data storage medium having multiple readable information layers (such as double or triple readable information layers) are also applicable to the third embodiment of the present invention. As shown in Fig.5, the optical data storage medium 90 includes a plurality of data structures 92a formed by etching a surface of a first substrate 92, a masking layer 93 positioned on the first substrate 92 and the data structures 92a, a reflective layer 96 positioned on the masking layer 93, a reactive layer 95 positioned adjacent to the masking layer 93 (such as above the masking layer 93 or below the masking layer 93), a barrier layer 94 interposed between the reactive layer 95 and the masking layer 93, and a bonding layer 98 positioned on the reflective layer 96 for bonding the first substrate 92 with a second substrate 100. Normally, the first substrate 92 and the second substrate 100 are made of polycarbonate, the reflective layer 96 is a metallic layer, and the reactive layer 73 is made of reactive compounds for defining readable times of the optical data storage medium 90.

For reading data of the optical data storage medium 90 (i.e., the data structures 92a), a laser beam 102 of a predetermined focusing depth is emitted from a picked head (not shown) installed under the first substrate 92 and is penetrating through the first substrate 92, the masking layer 93, the barrier layer 94, the reactive layer 95 until the reflective layer 96. As a result, a photo detector of the picked head can be used to detect a reflected laser beam 102 from the reflective layer 96 for identifying the data structures 92a.

With the play times increasing, the accumulated energy in the optical data storage medium 90 achieves diffusion of the reactive compounds from within the reactive layer 95 to the barrier layer 94 and the masking layer 93. Therein, the barrier layer 94 is used to control the time of the reactive compounds diffusing to the masking layer 93. Furthermore, the diffused reactive compounds react with the masking layer 93 so as to change the reflectivity of the masking layer 93. Specifically, with the play times increasing, the reflectivity of the masking layer 93 covering a portion of the data structures 92a also changes, resulting in magnitude decay or direction deviation of the reflected laser beam 102 for reading the portion of the data structures 92a. Therefore, the photo detector of the picked head is unable to detect the reflected laser beam 102 correctly, and the optical data storage medium 90 of the present invention is limitedly read.

Please refer to Fig.6 of a cross-sectional diagram of a forth embodiment of an optical data storage medium 110 according to the present invention. The optical data storage medium 110 is a dual-layer DVD, such as a DVD-9 disc, having two readable information layers. The forth embodiment of the present invention applies the method of the second embodiment, which uses reactive compounds to change the reflectivity of the reflective layer, for limiting play times of the optical data storage medium 110 having two readable information layers. As shown in Fig.6, the optical data storage medium 110 includes a plurality of data structures 112a formed by etching a surface of a first substrate 112, a semi-reflective layer 114 positioned on the first substrate 112 and the data structures 112a, a first reactive layer 116 positioned adjacent to the semi-reflective layer 114 (such as above the semi-reflective layer 114 or below the semi-reflective layer 114), a reflective layer 120 positioned on a second substrate 124 and a plurality of data structures 124a formed by etching a surface of the second substrate 124, a second reactive layer 122 positioned adjacent to the reflective layer 120 (such as above the reflective layer 120 or below the reflective layer 120), and a bonding layer 118 interposed between the semi-reflective layer 114 and the reflective layer 120 for bonding the first substrate 112 with the second substrate 124. Normally, the first substrate 112 and the second substrate 124 are made of polycarbonate the semi-reflective layer 114 is a metallic layer, such as a gold layer, the reflective layer 122 is also a metallic layer, such as an aluminum layer, and the first and the second reactive layer 116, 122 is made of reactive compounds for defining readable times of the optical data storage medium 110.

For reading lower data of the optical data storage medium 110 (i.e., the data structures 112a), a laser beam 126 of a predetermined focusing depth is emitted from a picked head (not shown) installed under the first substrate 112 and is penetrating through the first substrate 112, the data structures 112a, until the semi-reflective layer 114. As a result, a photo detector of the picked head can be used to detect a reflected laser beam 126 from the semi-reflective layer 114 for identifying the data structures 112a. Similarly, for reading upper data of the optical data storage medium 110 (i.e., the data structures 124a), a laser beam 128 of a predetermined focusing depth is emitted from the picked head installed under the first substrate 112 and is penetrating through the first substrate 112, the semi-reflective layer 114, the first reactive layer 116, the bonding layer 118 until the reflective layer 120. As a result, a photo detector of the picked head can be used to detect a reflected laser beam 128 from the reflective layer 120 for identifying the data structures 124a.

With the play times increasing, the accumulated energy in the optical data storage medium 110 achieves diffusion of the reactive compounds from within the first reactive layer 116 and the second reactive layer 122 respectively to the semi-reflective layer 114 and the reflective layer 120 for changing the reflectivity of the semi-reflective layer 114 and the reflective layer 120. Specifically, with the play times increasing, the reflectivity of the semi-reflective layer 114 covering a portion of the data structures 112a and the reflective layer 120 covering a portion of the data structures 124a also change, resulting in magnitude decay or direction deviation of the reflected laser beam 126, 128 for reading the portion of the data structures 112a, 124a. Therefore, the photo detector of the picked head is unable to detect the reflected laser beam 112a, 124a correctly, and the optical data storage medium 110 of the present invention is limitedly read. Additionally, for controlling the diffusion time of the reactive compounds diffused from within the first reactive layer 116 to the semi-reflective layer 114 and from within the second reactive layer 122 to the reflective layer 120, a barrier layer (not shown) is respectively formed between the first reactive layer 116 and the semi-reflective layer 114 and between the second reactive layer 122 and the reflective layer 120. The barrier layer is used to control the reflectivity change rate of the semi-reflective layer 225 and the reflective layer 120 and further to limit the readable times or readable hours of the optical data storage medium 110.

Moreover, according to other embodiments of the present invention, a detection device, such as a program of a counting function, is installed in a lead-in area of an optical data storage medium for computing whether read times or read hours of the optical data storage medium exceed the defined readable times or readable hours of the optical data storage medium so as to control the lifetime of the optical data storage medium more effectively.

In contrast to the prior art, the present invention uses the energy accumulating during the play process of the optical data storage medium to change the reflectivity of particular layers included in the optical data storage medium. Therefore, signals for reading the data stored in the optical data storage medium decay with the play times increasing, and finally the data stored in the optical data storage medium is unreadable. As a result, a lifetime of the optical data storage medium can be defined by changing construction materials of the optical data storage medium itself, thus preventing the information stored in the optical data storage medium from being unlimitedly read or copied.

## Claims

1. An optical data storage medium (50) comprising:
a first substrate (52), and a surface of the first substrate (52) including a plurality of first data structures (52a); and
a second substrate (60) positioned on the first substrate (52), and a surface of the second substrate (60) including a plurality of second data structures (60a) positioned on the first data structures;
**characterized in**
**that** the optical data storage medium (50) further comprises:
a reflective layer (58) positioned on the surface of the second substrate (60); and
a masking layer (54) interposed between the reflective layer (58) and the first substrate (52) for covering the first data structures (52a), and the masking layer (54) having a changeable reflectivity for limiting the second data structures (60a) to be read.

2. The optical data storage medium (50) of claim 1 **characterized in that** the reflective layer (58) is a metallic layer.

3. The optical data storage medium (50) of claim 1 **characterized in that** the masking layer (54) is composed of a phase change material, and the phase change material transforms from an amorphous phase into a crystal phase by using accumulated energy during reading processes of the optical data storage medium (50).

4. The optical data storage medium (50) of claim 3 **characterized in that** the changeable reflectivity increases with the ratio of crystal structures within the masking layer (54) raises until the first data structures (52a) are readable by a laser beam.

5. The optical data storage medium (50) of claim 1 **characterized in that** the optical data storage medium (50) is read by a laser beam (62, 64) emitted from a picked head installed under the first substrate (52).

6. The optical data storage medium (50) of claim 1 **characterized in that** the first data structures (52a) are used to store a warning statement showing that the second data structures (60a) are unreadable.

7. The optical data storage medium (50) of claim 1 **characterized in that** the second data structures (60a) is formed by etching the surface of the second substrate (60) counterclockwise.

8. An optical data storage medium (70, 90, 110) comprising:
at least a substrate (72, 92, 124), a surface of the substrate (72, 92, 124) including a plurality of data structures (72a, 92a, 124a);
at least a reflective layer (76, 96, 120) positioned on a surface of the substrate (72, 92, 124); and
at least a reactive layer (73, 95, 122) positioned on the surface of the substrate (72, 92, 124);
**characterized in**
**that** the reactive layer (73, 95, 122) comprises at least one kind of reactive compound, and the reactive layer (73, 95, 122) uses accumulated energy during reading processes of the optical data storage medium (70, 90, 110) to diffuse the reactive compound to the reflective layer (76, 96, 120) for changing reflectivity of the reflective layer (76, 96, 120) and limiting the data structures (72a, 92a, 124a) to be read.

9. The optical data storage medium (70, 90) of claim 8 **characterized in that** the optical data storage medium (70, 90) further comprises a barrier layer (74, 94) interposed between the reflective layer (76, 96) and the reactive layer (73, 95) for controlling a diffusion time of the reactive compound diffusing from the reactive layer (73, 95) to the reflective layer (76, 96).

10. The optical data storage medium (70, 90, 110) of claim 8 **characterized in that** the reactive layer (73, 95, 122) is interposed between the reflective layer (76, 96, 120) and the substrate (72, 92, 124).

11. The optical data storage medium (70, 90, 110) of claim 8 **characterized in that** the reactive layer (73, 95, 122) is interposed between the reflective layer (76, 96, 120) and a picked head.

12. The optical data storage medium (70, 90, 110) of claim 8 **characterized in that** the optical data storage medium (70, 90, 110) further comprises a detection device installed in a lead-in area of the optical data storage medium (70, 90, 110) for computing read times of the optical data storage medium (70, 90, 110).

13. An optical data storage medium (90) comprising:
at least a substrate (92), a surface of the substrate (92) including a plurality of data structures (92a);
at least a reflective layer (96) positioned on a surface of the substrate (92);
a masking layer (93) positioned on a surface of the reflective layer (96); and
at least a reactive layer (95) positioned on the surface of the substrate (92);
**characterized in**
**that** the reactive layer (95) comprises at least one kind of reactive compound, and the reactive layer (95) uses accumulated energy during reading processes of the optical data storage medium (90) to diffuse the reactive compound to the masking layer (93) for changing reflectivity of the masking layer (93) and limiting the data structures (92a) to be read.

14. The optical data storage medium (90) of claim 13 **characterized in that** the optical data storage medium (90) further comprises a barrier layer (94) interposed between the reactive layer (95) and the masking layer (93) for controlling a diffusion time of the reactive compound diffusing from the reactive layer (95) to the masking layer (93) .

15. The optical data storage medium (90) of claim 13 **characterized in that** the masking layer (93) is interposed between the reflective layer (96) and a picked head.

16. The optical data storage medium (90) of claim 13 **characterized in that** the optical data storage medium (90) further comprises a detection device installed in a lead-in area of the optical data storage medium (90) for computing read times of the optical data storage medium (90).
